# EUROPEAN PATENT SPECIFICATION

(11) **EP 3 892 358 B1**
(45) Date of publication and mention of the grant of the patent: **09.10.2024**
(21) Application number: 18942265.2
(22) Date of filing: 17.12.2018
(51) Int. Cl.: B01D 53/75, B01D 53/56, B01D 53/50, B01D 53/86, B01D 53/34, F23G 7/07, F23G 7/06

(54) **DEVICE AND METHOD FOR PURIFYING CO AND NOX SINTERED FLUE GAS**
VORRICHTUNG UND VERFAHREN ZUR REINIGUNG VON GESINTERTEM CO- UND NOX-RAUCHGAS
DISPOSITIF ET PROCÉDÉ DE PURIFICATION DE CO ET DE NOX DANS UN GAZ DE COMBUSTION FRITTÉ

(30) Priority: 06.12.2018 CN 201811487884
(43) Date of publication of application: 13.10.2021
(73) Proprietor: INSTITUTE OF PROCESS ENGINEERING, CHINESE ACADEMY OF SCIENCES, Haidian District Beijing 100190 (CN)
(72) Inventor: ZHU, Tingyu, Beijing 100190 (CN); LIU, Xiaolong, Beijing 100190 (CN); ZHANG, Cheng, Beijing 100190 (CN); NING, Ruliang, Beijing 100190 (CN)
(74) Representative: Cabinet Beaumont
(86) International application number: PCT/CN2018/121405
(87) International publication number: WO 2020/113662

(56) References cited:
- CN-A- 104 492 257
- CN-A- 108 310 972
- CN-A- 108 568 207
- CN-A- 108 568 207
- CN-A- 108 607 341
- JP-A- 2000 300 961
- JP-A- 2012 245 444
- JP-A- 2014 237 080
- JP-A- H05 115 750
- US-A1- 2008 219 908

## Description

### TECHNICAL FIELD

The present invention belongs to the field of flue gas purification, and relates to an apparatus and a method for purifying CO and NOₓ in sintering flue gas.

### BACKGROUND

In recent years, with increasingly serious environmental problems, an emission reduction technology in industrial production has also been continuously developed, and the treatment of emissions of air pollutants becomes one important issue. With the transformation of the conventional desulfurization, denitrification, and dust removal of most coal-fired power plants being completed, air pollutants of thermal power have officially entered an ultra-clean emission stage. In the future, an incremental market for the air pollution control industry will mainly come from the ultra-low emission transformation of coal-fired power plants and the treatment of flue gas of non-electricity industry. The treatment of air pollutants in the non-electricity industry comprises the treatment of various kinds of industrial flue gases which involve steel, cement, metallurgy, etc. The steel industry has entered an ultra-low emission transformation stage. The steel industry comprises five procedures: sintering, coking, iron making, steel making, and steel rolling. The emission of NOₓ during a sintering procedure accounts for half of the total emission in main procedures of the steel industry. Therefore, the control of nitrogen oxides (NOₓ) in flue gas during the sintering procedure of the steel industry is the focus of the steel companies on NOₓ reduction.

At present, denitrification technologies of sintering flue gas mainly comprise activated carbon adsorption, oxidative denitrification, and selective catalytic reduction (SCR), etc. Activated carbon used in the activated carbon adsorption is expensive, has a limited adsorption capacity, requires frequent regeneration, consumes a large amount of water, and is prone to secondary pollution. In addition, the loss of raw materials during a regeneration process is large, so that investment costs and operation costs are high. The oxidative denitrification means to oxidize insoluble NO into easily soluble NO₂ by use of an oxidant and then absorb NO₂ with water or an alkaline solution. However, a common oxidant, O₃, for oxidative denitrification tends to be prepared at a high cost, and the efficiency of the subsequent absorption is greatly affected by flue gas conditions and thus unstable. At present, the SCR technology is widely applied to denitrification in power plants. However, the operating temperature of the SCR technology is much higher than that of the sintering flue gas, so the sintering flue gas needs to be heated, resulting in higher costs. Studies on the improvement of this technology have also been widely reported.

CN108479332A has disclosed a desulfurization, denitrification, and white smoke elimination system for low-temperature flue gas, including a wet desulfurization tower, a gas-gas heat exchanger, and a denitrification reactor. Wet flue gas after wet desulfurization enters the gas-gas heat exchanger after being mixed with hot gas and preheated, is heated and mixed with hot gas to increase its temperature, and then enters the denitrification reactor to remove nitrogen oxides. Flue gas after denitrification is cooled by the gas-gas heat exchanger and discharged through a chimney. Although thermal loads required for denitrification reaction are reduced to a certain extent, hot gas is still needed to supplement a heat source. CN106287778A has disclosed a fired heater device for a desulfurization and denitrification system of flue gas. The device is equipped with a burner and a blender on flue and heats low-temperature flue gas by burning fuels to enable the flue gas to reach an optimal catalytic temperature of a denitrification catalyst. However, the device also needs to use the fuels and has relatively high costs.

Each of JP H05-115750 A and JP 2014-237080 A shows a system for the purification of flue gas from a sintering furnce, comprising a desulfurization device, a catalytic carbon monoxide oxidation device, and a catalytic dentrification device.

In addition, CO produced due to the incomplete combustion of carbonaceous substances will also harm human bodies and the environment, and the sintering procedure of the steel industry also produces a relatively large amount of CO. However, the above flue gas treatment process cannot treat CO in the flue gas. The heat of combustion of CO is 280.04 kJ/mol, so that CO has a high calorific value and a high utilization value. The content of CO in the sintering flue gas is generally high. For example, a sintering machine of 240 m² produces 1 million m³/h of flue gas, and a maximum concentration of CO can reach 9000 mg/m³. If CO can be used reasonably, CO can provide heat for reheating the flue gas, so that the temperature of the flue gas can reach a range of activity of the denitrification catalyst.

In summary, in addition to desulfurization and denitrification, the removal of CO is also necessary for the treatment of the sintering flue gas, so as to achieve higher purification efficiency and reduce treatment costs as much as possible.

### SUMMARY

In view of the problem in the existing art, an object of the present invention is to provide an apparatus and a method for purifying CO and NOₓ in sintering flue gas. In the present invention, the flue gas is sequentially subjected to desulfurization, CO removal, and denitrification. The desulfurization can reduce a toxic effect of SO₂ in the flue gas on a denitrification catalyst, and the flue gas is re-heated during the CO removal to make the flue gas reach the temperature required for a denitrification reaction, which can reduce CO emissions and reheating costs. The preceding process achieves cascade purification of the flue gas, and meanwhile, the apparatus is simple in structure and convenient in operation.

To achieve this object, the present invention adopts technical solutions below. In one aspect, the present application provides an apparatus for purifying CO and NOₓ in sintering flue gas according to claim 1.

In the present invention the apparatus for purifying flue gas comprises the desulfurization unit, the CO combustion unit, and the denitrification unit in sequence, that is, desulfurization, CO removal, and denitrification are performed in sequence. The SCR reactor is disposed after the desulfurization unit to reduce a toxic effect of SO₂ on a catalyst and improve a service life of a SCR denitrification catalyst; the CO combustion unit is disposed before the denitrification unit, which can not only remove CO in the flue gas but also reheat the flue gas by use of its high calorific value to make the flue gas entering the subsequent SCR reactor reach a temperature range of activity of a denitrification catalyst and improve the treatment efficiency of the flue gas. Moreover, the apparatus in the present invention has a simple structure, convenient operations, and low investment and operation costs.

The followings are preferred technical solutions of the present invention, and not to be construed as limitations to the technical solutions provided by the present application. Through the following technical solutions, the objects and the beneficial effects of the present application can be better implemented and achieved.

As a preferred technical solution of the present invention, the desulfurization unit comprises a desulfurizer supply device, a spraying device, and a desulfurization tower, where the desulfurizer supply device is connected to the spraying device, and the spraying device is disposed inside the desulfurization tower and at the top of the desulfurization tower.

In the present invention, the desulfurization treatment adopts a semi-dry method which optionally comprises any one of a method of a circulating fluidized bed, a method of a dense flow absorber, or a rotary spray drying method. The operations of the desulfurization unit, such as the supply of the desulfurizer and liquid spraying, are controlled by a PLC control system.

As a preferred technical solution of the present invention, the CO catalytic combustor comprises a housing, a catalyst, a heat preservation layer, and a heat storage body, where the heat preservation layer is coated at an outer side of the housing, the catalyst and the heat storage body are disposed inside the housing, and the heat storage body is disposed around the catalyst.

Preferably, a material of the heat storage body is ceramics.

Preferably, the catalyst is a precious metal catalyst, preferably a palladium-based catalyst.

In the present invention, in the presence of the catalyst, CO can combust at a relatively low temperature to heat the flue gas after the desulfurization; and the CO catalytic combustor is provided with the heat preservation layer and the heat storage body, which can prevent heat released by the combustion of CO from being dissipated in large amounts and make full use of the heat to heat the flue gas.

Preferably, the SCR reactor comprises an ammonia injection grid and a bed of a denitrification catalyst, where the ammonia injection grid is disposed at the inlet of flue gas of the SCR reactor.

Preferably, the denitrification catalyst comprises a honeycomb catalyst and/or a plate catalyst.

Preferably, the denitrification catalyst comprises a vanadium-tungsten-titanium catalyst.

Preferably, a hot blast stove is further provided between the CO catalytic combustor and the SCR reactor.

In the present invention, since the initial temperature of the apparatus is relatively low during the ignition of a furnace, and the temperature of the SCR denitrification cannot be reached by relying on the heat provided by the catalytic combustion of CO, the hot blast stove is disposed to heat the flue gas. After the apparatus operates stably, the hot blast stove may be turned off. In this way, the denitrification can also be achieved when the furnace is started and stopped.

In the present invention, the apparatus further comprises a dust removal unit comprising a first dust removal means and a second dust removal means, where a gas outlet of the first dust removal means is connected to a gas inlet of the desulfurization unit, a gas inlet of the second dust removal means is connected to a gas outlet of the desulfurization unit, and a gas outlet of the second dust removal means is connected to a gas inlet of the CO combustion unit.

In the present invention, since the flue gas generally contains a large amount of dust, dust removal needs to be performed before desulfurization and denitrification. In the present application, to avoid an effect of residual dust and desulfurizer particles that may be carried after the desulfurization on the subsequent denitrification, dust removal is performed again.

Preferably, the first dust removal means is an electric precipitator.

Preferably, the second dust removal means is a bag filter.

In the present invention, the apparatus further comprises a heat exchange unit.

The heat exchange unit comprises a heat exchanger, where a cold source inlet of the heat exchanger is connected to a gas outlet of the second dust removal means, a cold source outlet of the heat exchanger is connected to a gas inlet of the CO catalytic combustor, and a heat source inlet of the heat exchanger is connected to a gas outlet of the SCR reactor.

Preferably, the apparatus further comprises a chimney, where a heat source outlet of the heat exchanger is connected to the chimney.

In the present invention, the temperature of the flue gas after desulfurization generally cannot reach the temperature of the catalytic combustion of CO, or the temperature is so low that the catalytic combustion of CO is not enough to heat the flue gas to the denitrification temperature; and the temperature of the flue gas after denitrification is generally high, and the direct discharge of the flue gas not only causes energy wastes but also easily damages a flue gas discharge apparatus. Therefore, the flue gas after denitrification may exchange heat with the flue gas after dust removals and desulfurization, so as to make full use of heat and improve the treatment efficiency of the apparatus.

In another aspect, the present invention provides a method for purifying CO and NOₓ in sintering flue gas by using the preceding apparatus. The method comprises: after a desulfurization treatment, the sintering flue gas enters the CO combustion unit to undergo a combustion reaction, and then undergoes a SCR denitrification treatment to obtain purified flue gas.

As a preferred technical solution of the present invention, the desulfurization treatment is semi-dry desulfurization.

Preferably, a desulfurizer for the desulfurization treatment comprises a calcium-based absorbent.

Preferably, the flue gas after the desulfurization treatment has a temperature of 120-150 °C, for example, 120 °C, 125 °C, 130 °C, 135 °C, 140 °C, 145 °C, or 150 °C, etc. However, the temperature is not limited to the listed values, and other unlisted values within this value range are also applicable.

Preferably, a first dust removal is performed before the desulfurization treatment, preferably an electric dust removal.

Preferably, a second dust removal is performed after the desulfurization treatment, preferably bag filtering.

As a preferred technical solution of the present application, the temperature of the combustion reaction is 140-200 °C, for example, 140 °C, 150 °C, 160 °C, 170 °C, 180 °C, 190 °C, or 200 °C, etc. However, the temperature is not limited to the listed values, and other unlisted values within this value range are also applicable.

In the present invention, within this temperature range, the higher the temperature of the combustion reaction, the higher the efficiency of the catalytic combustion, and the more complete the removal of CO.

Preferably, a catalyst for the combustion reaction is a precious metal catalyst, preferably a palladium-based catalyst.

Preferably, the flue gas after the combustion reaction has a temperature of 220-250 °C, for example, 220 °C, 225 °C, 230 °C, 235 °C, 240 °C, 245 °C, or 250 °C, etc. However, the temperature is not limited to the listed values, and other unlisted values within this value range are also applicable.

Preferably, a heat exchange treatment is performed before the flue gas enters the CO combustion unit.

Preferably, the flue gas after the heat exchange treatment has a temperature of 150-180 °C, for example, 150 °C, 155 °C, 160 °C, 165 °C, 170 °C, 175 °C, or 180 °C, etc. However, the temperature is not limited to the listed values, and other unlisted values within this value range are also applicable.

Preferably, a heat source for the heat exchange treatment is flue gas after the SCR denitrification treatment.

As a preferred technical solution of the present invention, the temperature of the denitrification treatment is 180-250 °C, for example, 180 °C, 190 °C, 200 °C, 210 °C, 220 °C, 230 °C, 240 °C, or 250 °C, etc. However, the temperature is not limited to the listed values, and other unlisted values within this value range are also applicable.

Preferably, a catalyst for the denitrification treatment comprises a honeycomb catalyst and/or a plate catalyst.

Preferably, the catalyst for the denitrification treatment comprises a vanadium-tungsten-titanium catalyst.

Preferably, the flue gas after the denitrification treatment is discharged through a chimney after the heat exchange treatment.

As a preferred technical solution of the present invention, the method comprises the following steps:
(1) After the sintering flue gas is subjected to an electric dust removal, a desulfurization treatment and a subsequent bag filtering are performed, where the flue gas after the dust removals and the desulfurization treatment has a temperature of 120-150 °C;
(2) The flue gas is subjected to a heat exchange treatment after the dust removals and the desulfurization treatment in step (1), and then a combustion reaction is performed in a CO combustion unit, where the temperature of the combustion reaction is 140-200 °C, a catalyst for the combustion reaction is a precious metal catalyst, and the flue gas after the combustion reaction has a temperature of 220-250 °C; and
(3) The flue gas is subjected to a SCR denitrification treatment after the combustion reaction in step (2), where the temperature of the SCR denitrification treatment is 180-250 °C, a catalyst for the SCR denitrification treatment is a vanadium-tungsten-titanium catalyst, and the purified flue gas obtained is discharged after a heat exchange with the flue gas after the dust removals and the desulfurization treatment in step (2).

Compared with the existing art, the present invention has beneficial effects below.
(1) The apparatus in the present invention is additionally provided with a CO combustion unit between the desulfurization unit and the denitrification unit, so that the combustion of CO is utilized to heat the flue gas, which can not only reduce the reheating costs of the flue gas, but also significantly reduce the concentration of CO in the flue gas. The removal efficiency of CO can reach about 90%, and the removal efficiency of NOₓ can reach 90% or more.
(2) The present invention achieves cascade utilization of heat through heat exchange of flue gases, reducing heat losses.
(3) The apparatus in the present invention is easy to operate, can operate stably with low energy consumption for a long term, and has strong applicability to the flue gas and a good development prospect.

### BRIEF DESCRIPTION OF DRAWINGS

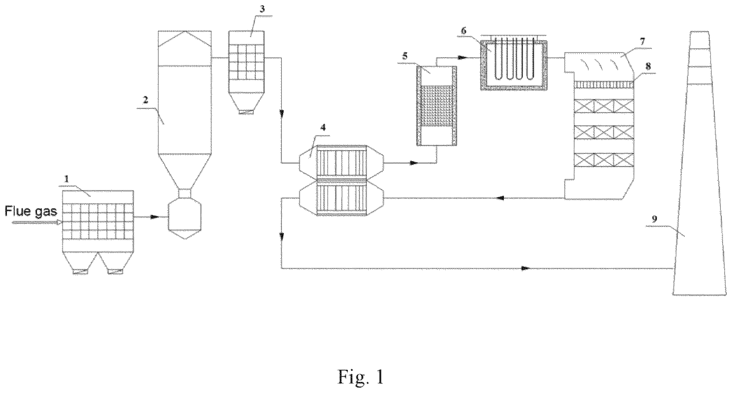

FIG. 1 is a structural diagram illustrating the connections of the flue gas purification apparatus according to Example 1 of the present invention.

Wherein, 1. first dust removal means; 2. desulfurization tower, 3. second dust removal means; 4. heat exchanger; 5. CO catalytic combustor; 6. hot blast stove; 7. SCR reactor; 8. ammonia injection grid; 9: chimney

### DETAILED DESCRIPTION

To better illustrate the present invention and to facilitate the understanding of the technical solutions of the present invention, the present invention is further described in details below.

The examples described below are merely simple examples of the present invention, and are not intended to represent or limit the protection scope of the present invention. The protection scope of the present invention is defined by the claims.

Typical but non-limiting examples of the present invention are described below.

### Example 1

This example provides an apparatus for purifying CO and NOₓ in sintering flue gas. A structural diagram illustrating the connections of the apparatus is shown in FIG. 1, and the apparatus comprises a desulfurization unit, a CO combustion unit, and a denitrification unit connected in sequence, where the CO combustion unit comprises a CO catalytic combustor 5, the denitrification unit comprises a SCR reactor 7, and an outlet of the CO catalytic combustor 5 is connected to an inlet of the SCR reactor 7.

The desulfurization unit comprises a desulfurizer supply device, a spraying device, and a desulfurization tower 2, where the spraying device is disposed inside the desulfurization tower 2 and at the top of the desulfurization tower 2. The CO catalytic combustor 5 comprises a bed of a precious metal catalyst, a heat preservation layer, and a heat storage body; and the SCR reactor 7 comprises an ammonia injection grid 8 and a bed of a denitrification catalyst, where the ammonia injection grid 8 is disposed at an inlet of flue gas of the SCR reactor 7.

A hot blast stove 6 is further provided between the CO catalytic combustor 5 and the SCR reactor 7.

The apparatus further comprises a dust removal unit comprising a first dust removal means 1 and a second dust removal means 3, where a gas outlet of the first dust removal means 1 is connected to a gas inlet of the desulfurization unit, a gas inlet of the second dust removal means 3 is connected to a gas outlet of the desulfurization unit, and a gas outlet of the second dust removal means 3 is connected to a gas inlet of the CO combustion unit. The first dust removal means 1 is an electric precipitator, and the second dust removal means 3 is a bag filter.

The apparatus further comprises a heat exchange unit comprising a heat exchanger 4, where a cold source inlet of the heat exchanger 4 is connected to a gas outlet of the second dust removal means 3, a cold source outlet of the heat exchanger 4 is connected to a gas inlet of the CO catalytic combustor 5, and a heat source inlet of the heat exchanger 4 is connected to a gas outlet of the SCR reactor 7.

The apparatus further comprises a chimney 9, where a heat source outlet of the heat exchanger 4 is connected to the chimney 9.

### Example 2

This example, which is not in accordance with the invention, provides an apparatus for purifying CO and NOₓ in sintering flue gas. The structure of the apparatus is referred to Example 1. A difference only lies in that the apparatus does not comprise a heat exchanger 4, that is, a gas outlet of a SCR reactor 7 is directly connected to a chimney 9.

In this example, without the heat exchanger, though the flue gas after desulfurization may still reach a denitrification temperature range through the catalytic combustion of CO, a denitrification catalyst does not have optimal activity, and the heat of flue gas after denitrification is not effectively utilized, so that the operation efficiency of the apparatus is reduced.

### Example 3

This example provides an apparatus for purifying CO and NOₓ in sintering flue gas. A structure of the apparatus is referred to Example 1. A difference only lies in that the apparatus does not comprise a hot blast stove 6.

In this example, since the apparatus has a relatively low temperature when being started and stopped, without the hot blast stove, the temperature of SCR denitrification cannot be reached by relying on heat provided by heat exchanges of flue gases and the catalytic combustion of CO, that is, the flue gas purification process cannot be performed when the apparatus is started and stopped.

### Example 4

This example provides a method for purifying CO and NOₓ in sintering flue gas. The method is performed by using the apparatus in Example 1. The flue gas is sintering flue gas produced by a sintering machine of 240 m² and has an amount of 1 million m³/h, where CO has a concentration of 9000 mg/m³, and NOₓ has a concentration of 300 mg/m³.

The method comprises the following steps:
(1) After the sintering flue gas with an initial temperature of 150 °C was subjected to an electric dust removal, a semi-dry desulfurization treatment and a subsequent bag filtering were performed, where the flue gas after the dust removals and the desulfurization treatment had a temperature of 120 °C;
(2) The flue gas after the dust removals and the desulfurization treatment in step (1) exchanged heat with the flue gas after denitrification and reached a temperature of 160 °C, and then was subjected to a combustion reaction in a CO combustion unit, where a catalyst for the combustion reaction was a palladium-based precious metal catalyst, and the flue gas after the combustion reaction reached a temperature of about 220 °C, and
(3) The flue gas was subjected to a SCR denitrification treatment after the combustion reaction in step (2), where a catalyst for the SCR denitrification treatment was a vanadium-tungsten-titanium honeycomb catalyst, and the purified flue gas obtained was discharged after a heat exchange with the flue gas after the dust removals and the desulfurization treatment in step (2).

In step (2), according to the content of CO in the flue gas and the heat of combustion of CO of 280.04 kJ/mol, the catalytic combustion efficiency reaches 90% in actual operation, it may be calculated that about 81.01 million kJ/h of heat is generated, and then a temperature increase of the flue gas is calculated.

In this example, flue gas purification can be achieved without an additional external heat supply, where the content of CO decreases to 900 mg/m³, the concentration of NOₓ decreases to 30 mg/m³, and the removal efficiency of CO and the removal efficiency of NOₓ both reach 90%.

### Example 5

This example provides a method for purifying CO and NOₓ in sintering flue gas. The method is performed by using the apparatus in Example 1. The flue gas has the same composition as the flue gas in Example 4.

The method comprises the following steps:
(1) After the sintering flue gas with an initial temperature of 180 °C was subjected to an electric dust removal, a semi-dry desulfurization treatment and a subsequent bag filtering were performed, where the flue gas after the dust removals and the desulfurization treatment had a temperature of 150 °C;
(2) The flue gas after the dust removals and the desulfurization treatment in step (1) exchanged heat with the flue gas after denitrification and reached a temperature of 180 °C, and then was subjected to a combustion reaction in a CO combustion unit, where a catalyst for the combustion reaction was a palladium-based precious metal catalyst, and the flue gas after the combustion reaction reached a temperature of about 250°C; and
(3) The flue gas was subjected to a SCR denitrification treatment after the combustion reaction in step (2), where a catalyst for the SCR denitrification treatment was a vanadium-tungsten-titanium plate catalyst, and the purified flue gas obtained was discharged after a heat exchange with the flue gas after the dust removals and the desulfurization treatment in step (2).

In this example, a temperature increase of the flue gas is calculated according to the combustion efficiency of CO in this case in a calculation manner which is the same as that in Example 4. After the flue gas is purified, the content of CO decreases to 800 mg/m³, the removal efficiency of CO reaches 91.1%, the concentration of NOₓ decreases to 15 mg/m³, and the removal efficiency of NOₓ reaches 95%.

### Example 6

This example provides a method for purifying CO and NOₓ in sintering flue gas. The method is performed by using the apparatus in Example 1. The flue gas has the same composition as the flue gas in Example 4.

The method comprises the following steps:
(1) After the sintering flue gas with an initial temperature of 160 °C was subjected to an electric dust removal, a semi-dry desulfurization treatment and a subsequent bag filtering was performed, where the flue gas after the dust removals and the desulfurization treatment had a temperature of 135 °C;
(2) The flue gas after the dust removals and the desulfurization treatment in step (1) exchanged heat with the flue gas after denitrification and reached a temperature of 170 °C, and then was subjected to a combustion reaction in a CO combustion unit, where a catalyst for the combustion reaction was a palladium-based precious metal catalyst, and the flue gas after the combustion reaction reached a temperature of about 235°C; and
(3) The flue gas was subjected to a SCR denitrification treatment after the combustion reaction in step (2), where a catalyst for the SCR denitrification treatment was a vanadium-tungsten-titanium honeycomb catalyst, and the purified flue gas obtained was discharged after a heat exchange with the flue gas after the dust removals and the desulfurization treatment in step (2).

In this example, a temperature increase of the flue gas is calculated according to the combustion efficiency of CO in this case in a calculation manner which is the same as that in Example 4. After the flue gas is purified, the content of CO decreases to 920 mg/m³, the removal efficiency of CO reaches 89.8%, the concentration of NOₓ decreases to 20 mg/m³, and the removal efficiency of NOₓ reaches 93.3%.

### Example 7

This example, which is not in accordance with the invention, provides a method for purifying CO and NOₓ in sintering flue gas. The method is performed by using the apparatus in Example 2. The flue gas has the same composition as the flue gas in Example 4. The method is referred to the method in Example 4, and a difference only lies in that the flue gas after the dust removals and the desulfurization treatment in step (2) is directly subjected to a combustion reaction in a CO combustion unit.

In this example, the flue gas after the combustion reaction can only reach a temperature of about 190 °C. Though the flue gas also reaches the temperature of a SCR reaction, the efficiency of a denitrification catalyst is slightly lower. The removal efficiency of CO decreases to 80%, and the removal efficiency of NOₓ also decreases to 84%.

### Comparative example 1

This example, which is not in accordance with the invention, provides an apparatus for purifying CO and NOₓ in sintering flue gas. The apparatus is referred to the apparatus in Example 1, and a difference only lies in that a CO catalytic combustor 5 is not comprised.

When the apparatus in this comparative example is used for treating the flue gas, since only heat exchange is performed, the flue gas entering a SCR reactor cannot reach the temperature of activity of a denitrification catalyst and needs to be additionally heated, which greatly increases treatment costs. Meanwhile, CO in the flue gas has not been effectively removed and will still do harm to the environment and human bodies.

It can be seen in conjunction with the preceding examples and comparative example that the present invention adds the CO combustion unit between the desulfurization unit and the denitrification unit and uses the combustion of CO to heat the flue gas, which can not only reduce reheating costs of the flue gas but also significantly reduce the concentration of CO in the flue gas; the removal efficiency of CO can reach about 90%, and the removal efficiency of NOₓ can reach 90% or more. The cascade utilization of heat is achieved through heat exchange of flue gases, reducing heat losses. The apparatus is easy to operate, can operate stably with low energy consumption for a long term, and has strong applicability to the flue gas and a good development prospect.

The applicant has stated that although the detailed apparatus and method of the present invention are described through the examples described above, the present invention is not limited to the apparatus and method described above, which means that the implementation of the present invention does not necessarily depend on the apparatus and method described above. It should be apparent to those skilled in the art that any improvements made to the present invention, equivalent replacements of the apparatus of the present invention, additions of auxiliary means, and selections of specific manners, etc., all fall within the protection scope and the disclosure scope of the present invention.

## Claims

1. An apparatus for purifying CO and NOx in sintering flue gas, comprising: a desulfurization unit (2), a CO combustion unit (5), and a denitrification unit (7) connected in sequence, the CO combustion unit comprises a CO catalytic combustor, the denitrification unit comprises a SCR reactor, and an outlet of the CO catalytic combustor is connected to an inlet of the SCR reactor;
wherein the apparatus further comprising a dust removal unit comprising a first dust removal means (1) and a second dust removal means (3), a gas outlet of the first dust removal means is connected to a gas inlet of the desulfurization unit, a gas inlet of the second dust removal means is connected to a gas outlet of the desulfurization unit, and a gas outlet of the second dust removal means is connected to a gas inlet of the CO combustion unit;
wherein the apparatus further comprising a heat exchange unit (4) comprising a heat exchanger, a cold source inlet of the heat exchanger is connected to a gas outlet of the second dust removal means, a cold source outlet of the heat exchanger is connected to a gas inlet of the CO catalytic combustor, and a heat source inlet of the heat exchanger is connected to a gas outlet of the SCR reactor.

2. The apparatus according to claim 1, wherein the desulfurization unit (2) comprises a desulfurizer supply device, a spraying device, and a desulfurization tower, the desulfurizer supply device is connected to the spraying device, and the spraying device is disposed inside the desulfurization tower and at the top of the desulfurization tower.

3. The apparatus according to claim 1 or 2, wherein the CO catalytic combustor (5) comprises a housing, a catalyst, a heat preservation layer, and a heat storage body, the heat preservation layer is coated at an outer side of the housing, the catalyst and the heat storage body are disposed inside the housing, and the heat storage body is disposed around the catalyst;
preferably, a material of the heat storage body is ceramics;
preferably, the catalyst is a precious metal catalyst, preferably a palladium-based catalyst;
preferably, the SCR reactor comprises an ammonia injection grid and a bed of a denitrification catalyst, the ammonia injection grid is disposed at the inlet of flue gas of the SCR reactor;
preferably, the denitrification catalyst comprises a honeycomb catalyst and/or a plate catalyst;
preferably, the denitrification catalyst comprises a vanadium-tungsten-titanium catalyst; and
preferably, a hot blast stove is further provided between the CO catalytic combustor and the SCR reactor.

4. The apparatus according to any one of claims 1 to 3, wherein the first dust removal means (1) is an electric precipitator; and preferably, the second dust removal means is a bag filter.

5. The apparatus according to claim 4, the apparatus further comprises a chimney (9), a heat source outlet of the heat exchanger is connected to the chimney.

6. A method for purifying CO and NOx in sintering flue gas by using the apparatus according to any one of claims 1 to 5, comprising: after a desulfurization treatment, the sintering flue gas enters the CO combustion unit to undergo a combustion reaction, and then undergoes a SCR denitrification treatment to obtain purified flue gas.

7. The method according to claim 6, wherein the desulfurization treatment is semi-dry desulfurization;
preferably, a desulfurizer for the desulfurization treatment comprises a calcium-based absorbent;
preferably, the flue gas after the desulfurization treatment has a temperature of 120-150 °C;
preferably, a first dust removal is performed before the desulfurization treatment,
preferably an electric dust removal; and
preferably, a second dust removal is performed after the desulfurization treatment, preferably bag filtering.

8. The method according to claim 6 or 7, wherein the temperature of the combustion reaction is 140-200 °C;
preferably, a catalyst for the combustion reaction is a precious metal catalyst,
preferably a palladium-based catalyst;
preferably, the flue gas after the combustion reaction has a temperature of 220-250 °C;
preferably, a heat exchange treatment is performed before the flue gas enters the CO combustion unit;
preferably, the flue gas after the heat exchange treatment has a temperature of 150-180 °C; and
preferably, a heat source for the heat exchange treatment is flue gas after the SCR denitrification.

9. The method according to any one of claims 6 to 8, wherein the temperature of the denitrification treatment is 180-250 °C;
preferably, a catalyst for the denitrification treatment comprises a honeycomb catalyst and/or a plate catalyst;
preferably, the catalyst for the denitrification treatment comprises a vanadium-tungsten-titanium catalyst; and
preferably, the flue gas after the denitrification treatment is discharged through a chimney after the heat exchange treatment.

10. The method according to any one of claims 6 to 9, comprising:
(1) After the sintering flue gas is subjected to an electric dust removal, a desulfurization treatment and a subsequent bag filtering are performed, and the flue gas after the dust removals and the desulfurization treatment has a temperature of 120-150 °C;
(2) The flue gas is subjected to a heat exchange treatment after the dust removals and the desulfurization treatment in step (1), and then a combustion reaction is performed in a CO combustion unit, the temperature of the combustion reaction is 140-200 °C, a catalyst for the combustion reaction is a precious metal catalyst, and the flue gas after the combustion reaction has a temperature of 220-250 °C; and
(3) The flue gas is subjected to a SCR denitrification treatment after the combustion reaction in step (2), the temperature of the SCR denitrification treatment is 180-250 °C, a catalyst for the SCR denitrification treatment is a vanadium-tungsten-titanium catalyst, and the purified flue gas obtained is discharged after a heat exchange with the flue gas after the dust removals and the desulfurization treatment in step (2).

## Patentansprüche

1. Vorrichtung zum Reinigen von CO und NOx in Sinterrauchgas, die Folgendes aufweist: eine Entschwefelungseinheit (2), eine CO-Verbrennungseinheit (5), und eine Entstickungseinheit (7), die hintereinander geschaltet sind, wobei die CO-Verbrennungseinheit einen katalytischen CO-Brenner aufweist, die Entstickungseinheit einen SCR-Reaktor aufweist und ein Auslass des katalytischen CO-Brenners mit einem Einlass des SCR-Reaktors verbunden ist;
wobei die Vorrichtung ferner eine Staubentfernungseinheit aufweist, die erste Staubentfernungsmittel (1) und zweite Staubentfernungsmittel (3) aufweist, wobei ein Gasauslass der ersten Staubentfernungsmittel mit einem Gaseinlass der Entschwefelungseinheit verbunden ist, ein Gaseinlass der zweiten Staubentfernungsmittel mit einem Gasauslass der Entschwefelungseinheit verbunden ist und ein Gasauslass der zweiten Staubentfernungsmittel mit einem Gaseinlass der CO-Verbrennungseinheit verbunden ist;
wobei die Vorrichtung ferner eine Wärmeaustauscheinheit (4) mit einem Wärmetauscher aufweist, wobei ein Kältequelleneinlass des Wärmetauschers mit einem Gasauslass der zweiten Staubentfernungsmittel verbunden ist, ein Kältequellenauslass des Wärmetauschers mit einem Gaseinlass des katalytischen CO-Brenners verbunden ist, und ein Wärmequelleneinlass des Wärmetauschers mit einem Gasauslass des SCR-Reaktors verbunden ist.

2. Vorrichtung nach Anspruch 1, wobei die Entschwefelungseinheit (2) eine Entschwefelungsmittel-Versorgungsvorrichtung, eine Sprühvorrichtung und einen Entschwefelungsturm aufweist, wobei die Entschwefelungsmittel-Versorgungsvorrichtung mit der Sprühvorrichtung verbunden ist und die Sprühvorrichtung innerhalb des Entschwefelungsturms und an der Spitze des Entschwefelungsturms angeordnet ist.

3. Vorrichtung nach Anspruch 1 oder 2, wobei der katalytische CO-Brenner (5) ein Gehäuse, einen Katalysator, eine Wärmehalteschicht und einen Wärmespeicherkörper aufweist, wobei die Wärmehalteschicht an einer Außenseite des Gehäuses beschichtet ist, der Katalysator und der Wärmespeicherkörper innerhalb des Gehäuses angeordnet sind und der Wärmespeicherkörper um den Katalysator herum angeordnet ist;
wobei ein Material des Wärmespeicherkörpers vorzugsweise Keramik ist;
wobei der Katalysator vorzugsweise ein Edelmetallkatalysator, vorzugsweise ein Katalysator auf Palladiumbasis ist;
wobei der SCR-Reaktor vorzugsweise ein Ammoniakeinspritzgitter und ein Bett eines Entstickungskatalysators aufweist, wobei das Ammoniakeinspritzgitter am Einlass des Rauchgases des SCR-Reaktors angeordnet ist;
wobei der Entstickungskatalysator vorzugsweise einen Wabenkatalysator und/oder einen Plattenkatalysator aufweist;
wobei der Entstickungskatalysator einen Vanadium-Wolfram-Titan-Katalysator aufweist; und
wobei vorzugsweise ferner ein Heiß-Gebläseofen zwischen dem katalytischen CO-Brenner und dem SCR-Reaktor vorgesehen ist.

4. Vorrichtung nach einem der Ansprüche 1 bis 3, wobei die ersten Staubentfernungsmittel (1) ein Elektroabscheider sind, und
die zweiten Staubentfernungsmittel vorzugsweise ein Taschenfilter sind.

5. Vorrichtung nach Anspruch 4, wobei die Vorrichtung ferner einen Schornstein (9) aufweist, wobei ein Wärmequellenauslass des Wärmetauschers mit dem Schornstein verbunden ist.

6. Verfahren zur Reinigung von CO und NOx in Sinterrauchgasen unter Verwendung der Vorrichtung nach einem der Ansprüche 1 bis 5, aufweisend: nach einer Entschwefelungsbehandlung tritt das Sinterrauchgases in die CO-Verbrennungseinheit ein, um eine Verbrennungsreaktion durchzuführen, und wird dann einer SCR-Entstickungsbehandlung unterzogen, um gereinigtes Rauchgas zu erhalten.

7. Verfahren nach Anspruch 6,
wobei die Entschwefelungsbehandlung eine halbtrockene Entschwefelung ist;
wobei ein Entschwefelungsmittel für die Entschwefelungsbehandlung vorzugsweise ein Absorptionsmittel auf Kalziumbasis aufweist;
wobei das Rauchgas nach der Entschwefelungsbehandlung vorzugsweise eine Temperatur von 120-150 °C aufweist;
wobei vorzugsweise eine erste Staubentfernungsbehandlung vor der Entschwefelungsbehandlung durchgeführt wird, vorzugsweise eine elektrische Staubentfernung; und
wobei vorzugsweise wird eine zweite Staubentfernungsbehandlung nach der Entschwefelungsbehandlung durchgeführt wird, vorzugsweise eine Taschenfilterung.

8. Verfahren nach Anspruch 6 oder 7,
wobei die Temperatur der Verbrennungsreaktion 140-200 °C beträgt;
wobei ein Katalysator für die Verbrennungsreaktion vorzugsweise ein Edelmetallkatalysator ist, vorzugsweise ein Katalysator auf Palladiumbasis;
wobei das Rauchgas nach der Verbrennungsreaktion vorzugsweise eine Temperatur von 220-250 °C aufweist;
wobei vorzugsweise eine Wärmeaustauschbehandlung durchgeführt wird, bevor das Rauchgas in die CO-Verbrennungseinheit eintritt;
wobei das Rauchgas nach der Wärmeaustauschbehandlung vorzugsweise eine Temperatur von 150-180 °C aufweist; und
wobei eine Wärmequelle für die Wärmeaustauschbehandlung das Rauchgas nach der SCR-Entstickung ist.

9. Verfahren nach einem der Ansprüche 6 bis 8,
wobei die Temperatur der Entstickungsbehandlung 180-250 °C beträgt;
wobei ein Katalysator für die Entstickungsbehandlung vorzugsweise einen Wabenkatalysator und/oder einen Plattenkatalysator aufweist;
wobei der Katalysator für die Entstickungsbehandlung vorzugsweise einen Vanadium-Wolfram-Titan-Katalysator aufweist; und
wobei das Rauchgas vorzugsweise nach der Entstickungsbehandlung und nach der Wärmeaustauschbehandlung durch einen Schornstein abgeleitet wird.

10. Verfahren nach einem der Ansprüche 6 bis 9, wobei das Verfahren Folgendes aufweist:
(1) nachdem das Sinterrauchgas einer elektrischen Staubentfernung unterzogen wurde, wird eine Entschwefelungsbehandlung und eine anschließende Taschenfilterung durchgeführt, und das Rauchgas hat nach den Staubentfernungen und der Entschwefelungsbehandlung eine Temperatur von 120-150 °C;
(2) das Rauchgas wird nach den Staubentfernungen und der Entschwefelungsbehandlung in Schritt (1) einer Wärmeaustauschbehandlung unterzogen, und dann wird eine Verbrennungsreaktion in einer CO-Verbrennungseinheit durchgeführt, wobei die Temperatur der Verbrennungsreaktion 140-200 °C beträgt, ein Katalysator für die Verbrennungsreaktion ein Edelmetallkatalysator ist und das Rauchgas nach der Verbrennungsreaktion eine Temperatur von 220-250 °C aufweist; und
(3) das Rauchgas wird nach der Verbrennungsreaktion in Schritt (2) einer SCR-Entstickungsbehandlung unterzogen, wobei die Temperatur der SCR-Entstickungsbehandlung 180-250 °C beträgt, ein Katalysator für die SCR-Entstickungsbehandlung ein Vanadium-Wolfram-Titan-Katalysator ist und das erhaltene gereinigte Rauchgas wird, nach einem Wärmeaustausch mit dem Rauchgas nach den Staubentfernungen und der Entschwefelungsbehandlung in Schritt (2), abgeleitet.

## Revendications

1. Appareil de purification de CO et NOx dans un gaz de combustion de frittage, comprenant : une unité de désulfuration (2), une unité de combustion de CO (5) et une unité de dénitrification (7) connectées en séquence, l'unité de combustion de CO comprend un dispositif de combustion catalytique de CO, l'unité de dénitrification comprend un réacteur SCR, et un échappement du dispositif de combustion catalytique de CO est connecté à une admission du réacteur SCR ;
dans lequel l'appareil comprenant en outre une unité de dépoussiérage comprenant des premiers moyens de dépoussiérage (1) et des deuxièmes moyens de dépoussiérage (3), un échappement de gaz des premiers moyens de dépoussiérage est connecté à une admission de gaz de l'unité de désulfuration, une admission de gaz des deuxièmes moyens de dépoussiérage est connectée à un échappement de gaz de l'unité de désulfuration, et un échappement de gaz des deuxièmes moyens de dépoussiérage est connecté à une admission de gaz de l'unité de combustion de CO ;
dans lequel l'appareil comprenant en outre une unité d'échange thermique (4) comprenant un échangeur de chaleur, une admission de source froide de l'échangeur de chaleur est connectée à un échappement de gaz des deuxièmes moyens de dépoussiérage, un échappement de source froide de l'échangeur de chaleur est connecté à une admission de gaz du dispositif de combustion catalytique de CO, et une admission de source de chaleur de l'échangeur de chaleur est connectée à un échappement de gaz du réacteur SCR.

2. Appareil selon la revendication 1, dans lequel l'unité de désulfuration (2) comprend un dispositif d'alimentation en désulfurant, un dispositif de pulvérisation et une tour de désulfuration, le dispositif d'alimentation en désulfurant est connecté au dispositif de pulvérisation et le dispositif de pulvérisation est disposé à l'intérieur de la tour de désulfuration et au sommet de la tour de désulfuration.

3. Appareil selon la revendication 1 ou 2, dans lequel le dispositif de combustion catalytique de CO (5) comprend un boîtier, un catalyseur, une couche de conservation de chaleur et un corps de stockage de chaleur, la couche de conservation de chaleur revêt un côté extérieur du boîtier, le catalyseur et le corps de stockage de chaleur sont disposés à l'intérieur du boîtier, et le corps de stockage de chaleur est disposé autour du catalyseur ;
de préférence, un matériau du corps de stockage de chaleur est de la céramique ;
de préférence, le catalyseur est un catalyseur à base de métal précieux, de préférence un catalyseur à base de palladium ;
de préférence, le réacteur SCR comprend une grille d'injection d'ammoniac et un lit d'un catalyseur de dénitrification, la grille d'injection d'ammoniac est disposée au niveau de l'admission des gaz de combustion du réacteur SCR ;
de préférence, le catalyseur de dénitrification comprend un catalyseur en nid d'abeille et/ou un catalyseur à plaques ;
de préférence, le catalyseur de dénitrification comprend un catalyseur vanadium-tungstène-titane ; et
de préférence, un poêle à vent chaud est en outre prévu entre le dispositif de combustion catalytique de CO et le réacteur SCR.

4. Appareil selon l'une quelconque des revendications 1 à 3, dans lequel les premiers moyens de dépoussiérage (1) sont un précipitateur électrique ; et
de préférence, les deuxièmes moyens de dépoussiérage sont un filtre à sac.

5. Appareil selon la revendication 4, l'appareil comprend en outre une cheminée (9), un échappement de source de chaleur de l'échangeur de chaleur est connecté à la cheminée.

6. Procédé de purification de CO et NOx dans des gaz de combustion de frittage en utilisant l'appareil selon l'une quelconque des revendications 1 à 5, comprenant : après un traitement de désulfuration, les gaz de combustion de frittage pénètrent dans l'unité de combustion de CO pour subir une réaction de combustion, puis subissent un traitement de dénitrification SCR pour obtenir des gaz de combustion purifiés.

7. Procédé selon la revendication 6, dans lequel le traitement de désulfuration est une désulfuration semi-sèche ;
de préférence, un désulfurant pour le traitement de désulfuration comprend un absorbant à base de calcium ;
de préférence, les gaz de combustion après le traitement de désulfuration ont une température de 120 à 150 °C ;
de préférence, un premier dépoussiérage est effectué avant le traitement de désulfuration, de préférence un dépoussiérage électrique ; et
de préférence, un deuxième dépoussiérage est effectué après le traitement de désulfuration, de préférence par filtrage à sac.

8. Procédé selon la revendication 6 ou 7, dans lequel la température de la réaction de combustion est de 140 à 200 °C ;
de préférence, un catalyseur pour la réaction de combustion est un catalyseur à base de métal précieux, de préférence un catalyseur à base de palladium ;
de préférence, les gaz de combustion après la réaction de combustion ont une température de 220 à 250 °C ;
de préférence, un traitement d'échange thermique est effectué avant l'admission des gaz de combustion dans l'unité de combustion de CO ;
de préférence, les gaz de combustion après le traitement d'échange thermique ont une température de 150 à 180 °C ; et
de préférence, une source de chaleur pour le traitement d'échange thermique est les gaz de combustion après la dénitrification SCR.

9. Procédé selon l'une quelconque des revendications 6 à 8, dans lequel la température du traitement de dénitrification est de 180 à 250 °C ;
de préférence, un catalyseur pour le traitement de dénitrification comprend un catalyseur en nid d'abeille et/ou un catalyseur à plaques ;
de préférence, le catalyseur pour le traitement de dénitrification comprend un catalyseur vanadium-tungstène-titane ; et
de préférence, les gaz de combustion après le traitement de dénitrification sont évacués par une cheminée après le traitement d'échange thermique.

10. Procédé selon l'une quelconque des revendications 6 à 9, comprenant :
(1)Après le frittage, les gaz de combustion sont soumis à un dépoussiérage électrique, à un traitement de désulfuration et à un filtrage ultérieur par sac, et les gaz de combustion après le dépoussiérage et le traitement de désulfuration ont une température de 120 à 150 °C ;
(2) Les gaz de combustion sont soumis à un traitement d'échange thermique après les dépoussiérages et le traitement de désulfuration de l'étape (1), puis une réaction de combustion est effectuée dans une unité de combustion de CO, la température de la réaction de combustion est de 140 à 200 °C, un catalyseur pour la réaction de combustion est un catalyseur en métal précieux, et les gaz de combustion après la réaction de combustion ont une température de 220 à 250 °C ; et
(3)Les gaz de combustion sont soumis à un traitement de dénitrification SCR après la réaction de combustion de l'étape (2), la température du traitement de dénitrification SCR est de 180 à 250 °C, un catalyseur pour le traitement de dénitrification SCR est un catalyseur vanadium-tungstène-titane, et les gaz de combustion purifiés obtenus sont évacués après un échange thermique avec les gaz de combustion après les dépoussiérages et le traitement de désulfuration de l'étape (2).
